# EUROPEAN PATENT SPECIFICATION

(11) **EP 2 815 802 B1**
(45) Date of publication and mention of the grant of the patent: **28.12.2016**
(21) Application number: 13748634.6
(22) Date of filing: 12.02.2013
(51) Int. Cl.: B01D 53/94, B01D 53/86, B01J 35/04, F01N 3/28, F01N 13/00, F01N 3/20

(54) **EXHAUST GAS NOX REMOVAL DEVICE FOR DIESEL ENGINE**
ABGAS-NOX-BESEITIGUNGSVORRICHTUNG FÜR EINEN DIESELMOTOR
DISPOSITIF D'ÉLIMINATION DES NOX DE GAZ D'ÉCHAPPEMENT POUR UN MOTEUR DIESEL

(30) Priority: 13.02.2012 JP 2012027899
(43) Date of publication of application: 24.12.2014
(73) Proprietor: Hitachi Zosen Corporation, Osaka-shi, Osaka 559-8559 (JP)
(72) Inventor: TANAKA, Hironaka, Osaka-shi, Osaka 559-8559 (JP)
(74) Representative: Van Breda, Jacobus
(86) International application number: PCT/JP2013/053185
(87) International publication number: WO 2013/122026

(56) References cited:
- JP-A- H0 724 259
- JP-A- 2001 190 916
- JP-A- 2006 223 983
- JP-A- 2009 255 046
- JP-A- 2011 194 312
- JP-A- 2011 241 139

## Description

### Technical Field

The present invention relates to an exhaust gas NOx removal device for a diesel engine.

### Background Art

Conventionally, in the case of a NOx removal device provided in an exhaust system for a diesel engine at a high pressure, the NOx removal device includes a cylindrical container instead of a prismatic container. For example, in a NOx removal reactor in Patent Literature 1, a catalyst element formed by cylindrically wrapping a ceramic sheet is radially divided into sectors so as to be easily inserted into a cylindrical container, and then the divided catalyst elements are combined into a cylindrical shape.

### Citation List

### Patent Literature

Patent Literature 1: Japanese Patent Laid-Open No. 07-24259

### Summary of Invention

### Technical Problem

In the conventional configuration, the ceramic sheet is cylindrically wrapped so as to be substantially identical in diameter to the NOx removal reactor to fabricate the catalyst element, and then the catalyst element is divided. Unfortunately, an element having a large size particularly requires a large cutter.

If the conventional configuration is applied to a NOx removal device for purifying exhaust gas from a marine diesel engine, the assembly of divided catalyst elements may reduce durability to withstand engine vibrations.

An object of the present invention is to provide an exhaust gas NOx removal device for a diesel engine with ease of assembly and durability to withstand vibrations and so on.

### Solution to Problem

In order to solve the problem, a first aspect of the present invention is an exhaust gas NOx removal device for a diesel engine, the NOx removal device including a cylindrical container body that receives exhaust gas guided from the diesel engine and contains NOx removal catalyst elements,
wherein the container body contains a plurality of catalyst units, each including a cylindrical housing frame body and the catalyst elements disposed in the housing frame body,
in the cross section of the container body, a horizontally and vertically symmetric imaginary octagon is assumed to be inscribed in the container body, and the imaginary octagon is assumed to contain a plurality of imaginary rectangular sections and a plurality of imaginary triangular sections and/or a plurality of imaginary trapezoidal sections between the imaginary rectangular sections and the outline of the imaginary octagon, and
the housing frame bodies for the catalyst elements are formed with cross sections coinciding with the sections.

According to a second aspect of the present invention, the housing frame body in the exhaust gas NOx removal device includes a cylindrical main body that accommodates the catalyst elements, a cylindrical front guide port that protrudes from the front of the main body and has a smaller diameter than the main body, and a cylindrical rear guide port that protrudes at the rear of the main body so as to be fit onto the front guide port.

According to a third aspect of the present invention, the catalyst elements in the housing frame body of the exhaust gas NOx removal device are extended with a length allowing formation of a space at the front of a main body, the housing frame body having first notches for passage of exhaust gas on the side walls of the main body that correspond to the space, and
exhaust gas can move between the adjacent housing frame bodies through the first notches.

According to a fourth aspect of the present invention, the main body of the housing frame body in the exhaust gas NOx removal device has second notches for reducing a weight of the housing frame body, the second notches being formed at different positions from the first notches on the side walls of the main body, and a cushioning material for protecting the catalyst elements is disposed on the surfaces, which correspond to the second notches, of the catalyst elements contained in the main body such that the cushioning material coincides with the second notches.

### Advantageous Effects of Invention

According to the inventions, the cylindrical container body is divided into the plurality of imaginary sections containing the catalyst units including the catalyst elements inserted into the housing frame bodies. Thus, unlike in the conventional configuration where a catalyst element composed of a cylindrically wrapped ceramic sheet is cut into multiple elements to be assembled into a container, the configurations of the inventions can promote ease of assembly and prevent a displacement of the catalyst element. This can ensure durability even if a NOx removal device is installed on an exhaust gas passage from a marine diesel engine that generates vibrations. Furthermore, unlike in the conventional configuration, the need for a cutter for the catalyst unit is eliminated.

### Brief Description of Drawings

[FIG. 1] FIG. 1 shows the layout of an exhaust gas NOx removal device for a diesel engine on an exhaust gas passage according to the present invention.
[FIG. 2] FIG. 2 is a perspective view of a rectangular catalyst unit in the NOx removal device.
[FIG. 3] FIG. 3 is a horizontal cross-sectional view of rectangular catalyst units in the NOx removal device.
[FIG. 4] FIG. 4 is a perspective view of a triangular catalyst unit in the NOx removal device.
[FIG. 5] FIG. 5 is a perspective view of a trapezoidal catalyst unit in the NOx removal device.
[FIG. 6] FIG. 6 is a front view showing a layout pattern of the catalyst units according to a first example of the present invention.
[FIG. 7] FIG. 7 is a front view of a layout pattern of the catalyst units according to a modification of the first example.
[FIG. 8] FIG. 8 is a front view of a layout pattern of the catalyst units according to another modification of the first example.
[FIG. 9] FIG. 9 is a front view of a layout pattern of the catalyst units in the NOx removal device according to a second example of the present invention.
[FIG. 10] FIG. 10 is a front view of a layout pattern of the catalyst units according to a first modification of the second example.
[FIG. 11] FIG. 11 is a front view of a layout pattern of the catalyst units according to a second modification of the second example.
[FIG. 12] FIG. 12 is a front view of a layout pattern of the catalyst units according to a third modification of the second example.
[FIG. 13] FIG. 13 is a front view of a layout pattern of the catalyst units according to a fourth modification of the second example.
[FIG. 14] FIG. 14 is a front view of a fixing device in the NOx removal device according to the examples of the present invention.
[FIG. 15] FIG. 15 is a cross-sectional view taken along line A-A of FIG. 14.
[FIG. 16] FIG. 16 is a side view of a retainer in the fixing device.

### Description of Embodiment

An exhaust gas NOx removal device for a diesel engine according to the present invention will be described below with reference to the accompanying drawings.

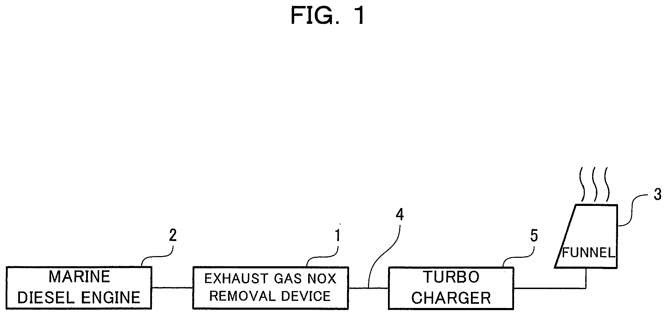

As shown in FIG. 1, an exhaust gas NOx removal device (hereinafter, will be referred to as a NOx removal device) 1 for a diesel engine is disposed upstream of a turbo charger 5, at a point of an exhaust gas passage 4 for guiding exhaust gas from a marine diesel engine 2 to a funnel 3. The NOx removal device 1 is provided for removing nitrogen oxides contained in exhaust gas.

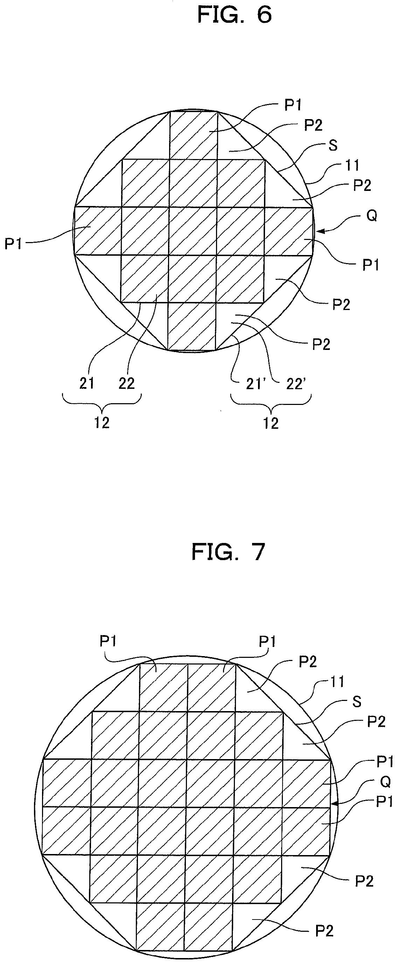

The exhaust gas NOx removal device 1 is broadly divided into a cylindrical container body (a cylindrical container illustrated in, for example, FIG. 6) 11 disposed at a point of the exhaust gas passage 4, and a plurality of catalyst units 12 disposed in the container body 11. The catalyst unit 12 includes catalyst elements. The catalyst units 12 are vertically stacked and are disposed in a lateral direction. Furthermore, the catalyst units 12 are sequentially disposed in a longitudinal direction.

The catalyst units 12 according to the present invention are disposed in various ways and have various shapes. The catalyst units 12 will be described below according to the following examples.

First, the representative structure of the catalyst unit 12 having a square cross section will be described below. The square cross section is an example of a rectangular cross section and thus the catalyst unit 12 may be rectangular in cross section. In addition to the square catalyst unit, trapezoidal and triangular (specifically, a right triangle) catalyst units will be described below.

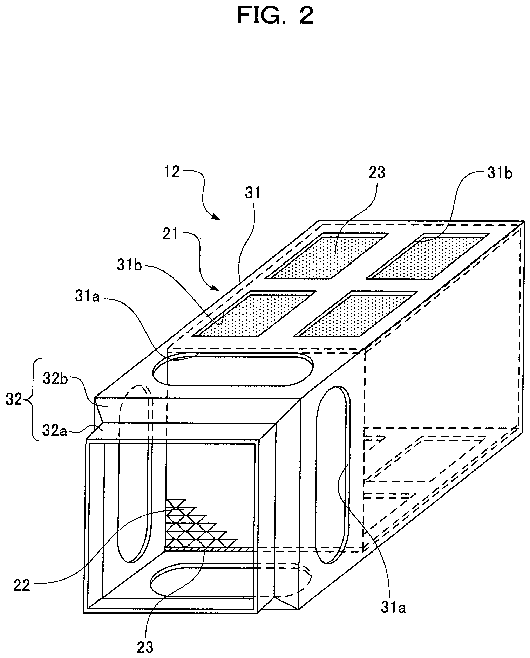

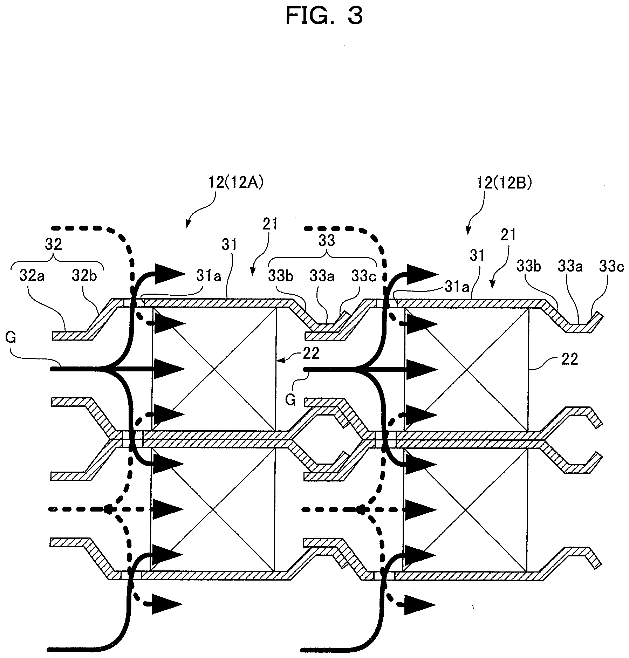

As shown FIGS. 2 and 3, the catalyst unit 12 having a square cross section includes a housing frame body 21 having a square cross section with a predetermined length, and honeycomb catalyst elements 22 stacked in layers in the housing frame body 21.

As has been discussed, the catalyst units 12 are vertically stacked and are disposed in the lateral direction. Furthermore, the catalyst units 12 are sequentially disposed in the longitudinal direction such that the front and rear parts of the catalyst units 12 are engaged with each other and exhaust gas G from the forward-mounted catalyst unit 12 (12A) can flow rearward into the right and left catalyst units 12 (12B).

The housing frame body 21 of the catalyst unit 12 includes a main body (also referred to as a body part) 31 shaped like a square rod having a predetermined diameter in cross section (a dimension, e.g., a width across the corners of the main body 31), a cylindrical front guide port 32 that protrudes at the front of the main body 31 and has a square opening with a smaller diameter than the predetermined diameter of the main body 31, and a cylindrical rear guide port 33 that protrudes at the rear of the main body 31, has a square opening with a smaller diameter than the predetermined diameter of the main body 31, and can receive the inserted front guide port 32.

When the housing frame bodies 21 are longitudinally disposed, the opposing ends of the housing frame bodies 21 are fit to each other so as to guide the exhaust gas G from the forward-mounted housing frame body 21 to the rearward housing frame body 21. Specifically, the rear guide port 33 is fit onto the front guide port 32.

Specifically, the front guide port 32 includes a flange 32a that is square in front view and is slightly smaller in diameter than the main body 31, and a connecting portion 32b that is shaped like a pyramid connecting the flange 32a and the main body 31. The rear guide port 33 similarly includes a flange 33a that is square in front view and is slightly smaller in diameter than the main body 31, a connecting portion 33b that is shaped like a pyramid connecting the flange 33a and the main body 31, and a bent guide portion 33c that protrudes from the front end (may be the rear end) of the flange 33a and extends along the front guide port 32 in the housing frame body 21 of the rearward catalyst unit 12 (12B).

Furthermore, oval first notches 31a are formed on peripheral walls (lateral side walls and upper and lower walls) at the front of the main body 31 of the housing frame body 21 while a plurality of rectangular second notches 31b for reducing weights are formed behind the first notches 31a on the opposed side walls, for example, the upper and lower walls of the main body 31 (at different positions from the first notches). For example, the number of the second notches 31b is four.

Thus, as shown in the horizontal cross-sectional view of FIG. 3, when the housing frame bodies 21 are laterally disposed (and vertically stacked, not shown) such that the guide ports 32 and 33 are longitudinally fit to each other, the exhaust gas G from the forward-mounted housing frame body 21 mostly passes through the catalyst elements 22 and then flows into the rearward catalyst elements 22. Moreover, the exhaust gas G is partially guided into the housing frame bodies 21 of the surrounding catalyst units 12 (top and bottom, left and right). In other words, the exhaust gas G is dispersed in the container body 11, improving reaction efficiency with a catalyst.

At positions corresponding to the second notches 31b, that is, on the surfaces (outer surfaces) of the catalyst elements 22, a cushioning material (e.g., a gasket material such as ceramic paper) 23 is disposed to protect the catalyst elements 22 and hold the catalyst elements 22 in the housing frame body 21.

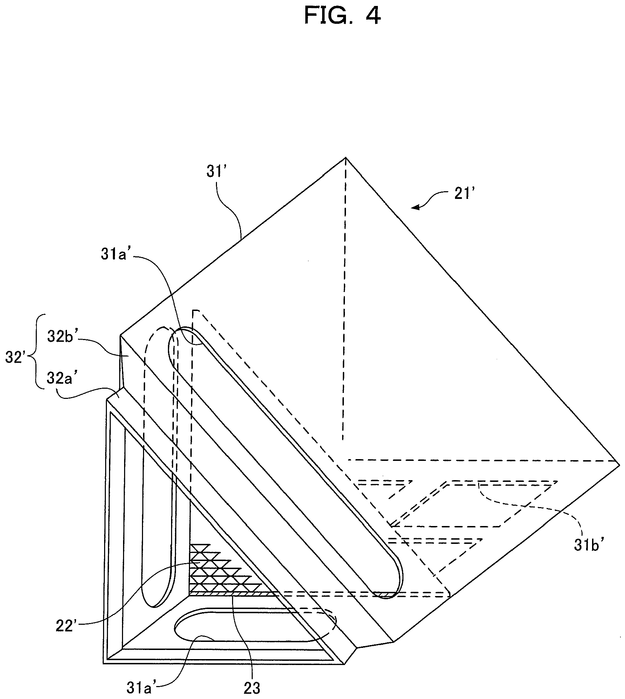

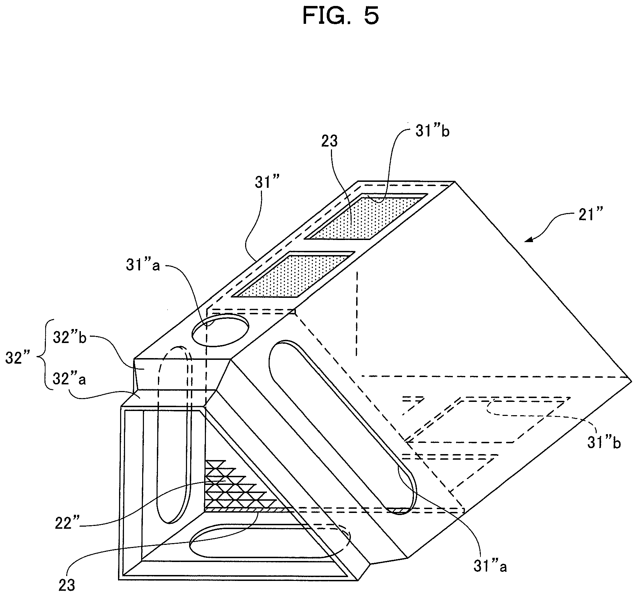

In addition to the square housing frame body 21, a housing frame body triangular in cross section and a housing frame body trapezoidal in cross section may be used as illustrated in FIGS. 4 and 5.

As a matter of course, housing frame bodies 21' and 21" that respectively accommodate catalyst elements 22' and 22" include main bodies 31' and 31", front guide ports 32'(32'a, 32'b), 32"(32"a, 32"b), and rear guide ports (not shown) that are triangular and trapezoidal in cross section. The main bodies 31' and 31" have first notches 31'a and 31"a and second notches 31'b and 31"b.

Patterns of the catalyst units 12 disposed in the cylindrical container body 11 will be described in the following examples:

### First Example

In a first example, the cylindrical container body 11 contains the catalyst units 12 including the housing frame bodies 21 that are square in cross section and the catalyst units 12 including the housing frame bodies 21(21') that are triangular, more precisely, shaped like right triangles in cross section.

Specifically, as shown in FIG. 6, it is assumed that an imaginary octagon S is in contact with the circular inner surface (inner periphery) of the container body 11 and is horizontally and vertically symmetric in the cross section of the cylindrical container body 11. It is also assumed that the imaginary octagon S contains a basic cross section array (hatched) Q obtained by stacking square basic cross sections P1 that are imaginary rectangular sections, and triangular auxiliary cross sections P2 that are imaginary triangular sections formed between the basic cross section array Q and the imaginary octagon (the edge, that is, the outline of the imaginary octagon) S. The housing frame bodies 21 of the catalyst units 12 have cross sections identical in shape to the assumed cross sections P1 and P2.

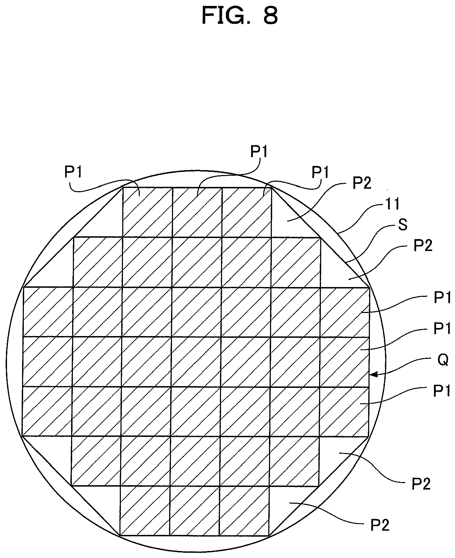

In FIG. 6, the basic cross sections P1 are arranged in a single row along the diameter of the cross section of the container body 11. FIG. 7 shows a first modification in which the basic cross sections P1 are arranged in two rows along the diameter of the cross section of the container body 11. FIG. 8 shows another modification in which the basic cross sections P1 are arranged in three rows along the diameter of the cross section of the container body 11. As a matter of course, the number of rows is not limited to three and thus may be increased when necessary. In FIGS. 7 and 8, reference numeral P2 denotes auxiliary cross sections. As a matter of course, the cross sections P1 and P2 contain the catalyst units 12 identical in shape to the cross sections P1 and P2.

### Second Example

In a second example, the cylindrical container body 11 contains the catalyst units 12 including the housing frame bodies 21 that are square in cross section and the catalyst units 12 including the housing frame bodies 21(21") that are trapezoidal in cross section (precisely, a trapezoid with one side forming an angle of 90° with the base).

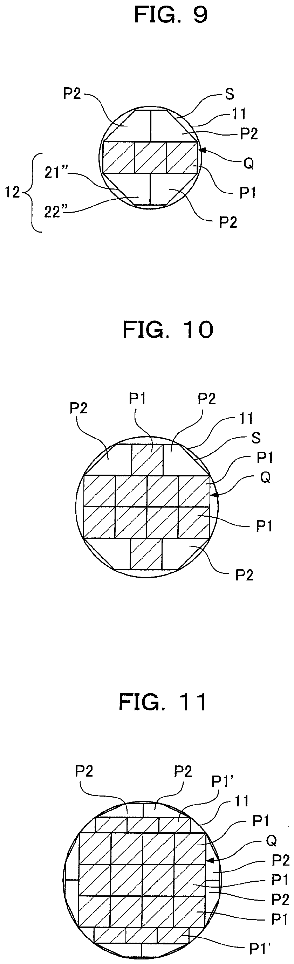

Specifically, as shown in FIG. 9, it is assumed that an imaginary octagon S is in contact with the circular inner surface (inner periphery) of the container body 11 and is horizontally and vertically symmetric in the cross section of the cylindrical container body 11. It is also assumed that the imaginary octagon S contains a basic cross section array (hatched) Q including square basic cross sections P1, and trapezoidal auxiliary cross sections P2 formed between the basic cross section array Q and the imaginary octagon (the edge, that is, the outline of the imaginary octagon) S. The housing frame bodies 21 of the catalyst units 12 are identical in cross sectional shape to the cross sections P1 and P2.

In FIG. 9, the square basic cross sections P1 are horizontally arranged in a single row along the diameter of the cross section of the container body 11. Imaginary trapezoidal parts formed on and under the square basic cross sections P1 are each divided at the center into the two auxiliary cross sections P2 that are imaginary trapezoidal sections.

FIG. 10 shows a first modification in which square basic cross sections P1 are disposed in two rows along the diameter of the cross section of the container body 11. Furthermore, it is assumed that imaginary trapezoidal parts on and under the basic cross sections P1 each include a basic cross section P1 disposed at the center and trapezoidal auxiliary cross sections P2 disposed on the right and left of the basic cross section P1.

FIG. 11 shows a second modification in which square basic cross sections P1 are disposed in three rows along the diameter of the cross section of the container body 11, and small rectangular basic cross sections P1' are disposed in a single row on and under the basic cross sections P1. Furthermore, it is assumed that imaginary trapezoidal parts formed on and under the basic cross sections P1' are each divided at the center into two auxiliary cross sections P2 that are two imaginary trapezoidal sections.

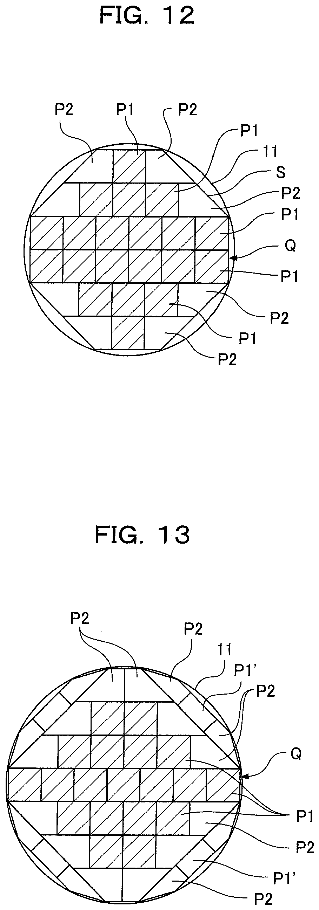

FIG. 12 shows a third modification in which a plurality of (e.g., six) square basic cross sections P1 are disposed in two rows along the diameter of the container body 11, a plurality of (e.g., three) square basic cross sections P1 are disposed thereon in a single row, a single square basic cross section P1 is disposed on and under the basic cross sections P1, and auxiliary cross sections P2 are provided between an imaginary octagon S and a basic cross section array (hatched) Q formed by the basic cross sections P1.

FIG. 13 shows a fourth modification in which it is assumed that an imaginary octagon S contains (e.g., seven) square basic cross sections P1 disposed in a single row along the diameter of the cross section of the container body 11, (e.g., four) square basic cross sections P1 disposed in a single row on and under the basic cross sections P1, (e.g., two) square basic cross sections P1 disposed in a single row on and under the basic cross sections P1, and trapezoidal auxiliary cross sections P2 disposed between the imaginary octagon S and a basic cross section array (hatched) formed by the basic cross sections P1. Moreover, it is assumed that a partial circular portion between the circular inner surface of the container body 11 and the imaginary octagon S is divided into a plurality of, e.g., three sections: a square basic cross section P1 and trapezoidal auxiliary cross sections P2 on both sides of the basic cross section P1.

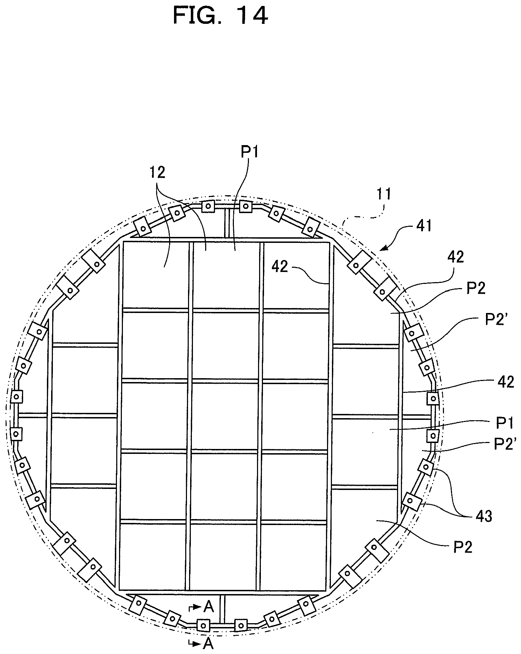

As shown in FIGS. 14 to 16, in order to fix the housing frame bodies 21 in the container body 11, a fixing device 41 for preventing movements of the catalyst units 12 is provided on the front and rear end faces of the catalyst units 12.

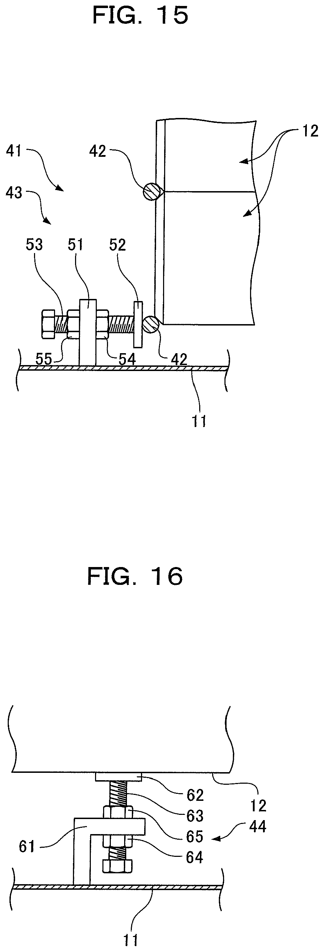

The fixing device 41 includes a pressing member 42 that is composed of a wire (or a plate material) disposed in, for example, a lattice pattern along the contacting portion (boundary) of the catalyst units 12 to press the catalyst units 12 placed on both sides of the contacting portion, and fixtures 43 that are provided near the container body 11 to press and fix the pressing member 42 from the outside. The fixing device 41 includes a retainer 44 that laterally presses the housing frame body 21 of the catalyst unit 12 disposed in the container body 11 and prevents a movement in a radial direction. As shown in FIG. 15, the fixture 43 includes a support bracket 51 raised on the inner surface of the container body 11, and a machine bolt 53 that is screwed into the support bracket 51 and has a pressing plate 52 capable of pressing the pressing member 42 on the end of the machine bolt 53. Locking nuts 54 and 55 are screwed onto the machine bolt 53. Like the fixture 43, the retainer 44 includes a support bracket 61 raised on the inner surface of the container body 11, a machine bolt 63 that is screwed into the support bracket 61 and has a pressing plate 62 capable of pressing the side of the housing frame body 21 on the end of the machine bolt 63, and locking nuts 64 and 65. In a layout pattern shown in FIG. 14, the container body 11 contains 19 (three columns x five or five columns x three) basic cross sections P1 and 12 auxiliary cross sections P2 and P2' of two kinds of trapezoids. As a matter of course, the shape of the pressing member 42 of the fixture 43 depends on a layout pattern of the catalyst units 12.

Thus, in the installation of the catalyst units 12 in the container body 11, the catalyst units 12 are all placed in the container body 11, and the side of the catalyst unit 12 in the container body 11 is first fixed by the retainer 44.

In this state, the pressing member 42 is then disposed in contact with the housing frame body 21, at the front and the rear of the catalyst unit 12. After that, the machine bolt 53 of the fixture 43 may be rotated so as to press the pressing member 42 with the pressing plate 52, fixing the pressing member 42 in a longitudinal direction. The pressing member 42 in a lattice fashion may have a divided structure if necessary.

According to the configurations of the examples, the cylindrical container body is divided into a plurality of imaginary sections containing the catalyst units including the catalyst elements inserted into the housing frame bodies. Thus, unlike in the conventional configuration where a catalyst element composed of a cylindrically wrapped ceramic sheet is cut into multiple elements to be assembled into a container, the configurations of the examples can promote ease of assembly and prevent a displacement of the catalyst element. This can ensure durability even if a NOx removal device is installed on an exhaust gas passage from a marine diesel engine that generates vibrations. Furthermore, unlike in the conventional configuration, the need for a cutter for the catalyst unit is eliminated.

## Claims

1. An exhaust gas NOx removal device (1) for a diesel engine (2), comprising a cylindrical container body (11) that receives exhaust gas guided from the diesel engine (2) and contains NOx removal catalyst elements,
**characterized in that** the container body (11) contains a plurality of catalyst units (12), each including a square, triangular or trapezoidal housing frame body (21) and the catalyst elements (22) disposed in the housing frame body (21),
in a cross section of the container body (11), a horizontally and vertically symmetric octagon (S) is assumed to be inscribed in the container body (11), and the octagon is assumed to contain a plurality of rectangular sections (P1) and a plurality of triangular sections (P2) and/or a plurality of trapezoidal sections (P2) between the rectangular sections and an outline of the octagon (S), and
the housing frame bodies (21) for the catalyst elements (22) are formed with cross sections coinciding with the sections.

2. The exhaust gas NOx removal device (1) for a diesel engine (2) according to claim 1, wherein the housing frame body (21) includes a square, triangular or trapezoidal main body (31) that accommodates the catalyst elements, a square, triangular or trapezoidal front guide port (32) that protrudes from a front of the main body (31) and has a smaller diameter than the main body (31), and a square, triangular or trapezoidal rear guide port (33) that protrudes at a rear of the main body (31) so as to be fit onto the front guide port (32).

3. The exhaust gas NOx removal device (1) for a diesel engine (2) according to claim 1, wherein the catalyst elements (22) in the housing frame body (21) are extended with a length allowing formation of a space at a front of a main body (31), the housing frame body (21) having first notches (31a) for passage of exhaust gas on side walls of the main body (31) that correspond to the space, and
exhaust gas can move between the adjacent housing frame bodies (21) through the first notches (31a).

4. The exhaust gas NOx removal device (1) for a diesel engine (2) according to claim 3, wherein the main body (31) of the housing frame body (21) has second notches (31b) for reducing a weight of the housing frame body (21), the second notches (31b) being formed at different positions from the first notches (31a) on the side walls of the main body (31), and a cushioning material (23) for protecting the catalyst elements (22) is disposed on surfaces, which correspond to the second notches (31b), of the catalyst elements (22) contained in the main body (31) such that the cushioning material (23) coincides with the second notches (31b).

## Patentansprüche

1. Vorrichtung (1) zur Entfernung von NOx aus Abgasen für einen Dieselmotor (2), mit einem zylindrischen Behälterkörper (11), der von dem Dieselmotor (2) abgeleitete Abgase aufnimmt und Katalysatorelemente zur Entfernung von NOx aufweist,
**dadurch gekennzeichnet, dass** der Behälterkörper (11) eine Vielzahl von Katalysatoreinheiten (12) aufweist, die jeweils einen quadratischen, dreieckigen oder trapezförmigen Gehäuserahmenkörper (21) aufweisen, wobei die Katalysatorelemente (22) in dem Gehäuserahmenkörper (21) angeordnet sind,
in einem Querschnitt des Behälterkörpers (11) betrachtet ein horizontal und vertikal symmetrisches Achteck (S) in dem Behälterkörper (11) als eingeschrieben angenommen ist (?) und davon ausgegangen wird, dass das Achteck eine Vielzahl von rechteckigen Abschnitten (P1) und eine Vielzahl von dreieckigen Abschnitten (P2) und/oder eine Vielzahl von trapezförmigen Abschnitten (P2) zwischen den rechteckigen Abschnitten und einem Umriss des Achtecks (S) enthält, und
die Gehäuserahmenkörper (21) für die Katalysatorelemente (22) mit Querschnitten ausgeführt sind, die mit den Abschnitten übereinstimmen.

2. Vorrichtung (1) zur Entfernung von NOx aus Abgasen für einen Dieselmotor (2) nach Anspruch 1, wobei der Gehäuserahmenkörper (21) einen quadratischen, dreieckigen oder trapezförmigen Hauptkörper (31), der die Katalysatorelemente aufnimmt, einen quadratischen, dreieckigen oder trapezförmigen vorderen Leitungsanschluss (32), der von einer Vorderseite des Hauptkörpers (31) vorsteht und einen kleineren Durchmesser als der Hauptkörper (31) aufweist, und einen quadratischen, dreieckigen oder trapezförmigen hinteren Leitungsanschluss (33) aufweist, der an einer Rückseite des Hauptkörpers (31) hervorsteht, um auf den vorderen Leitungsanschluss (32) montiert zu werden.

3. Vorrichtung (1) zur Entfernung von NOx aus Abgasen für einen Dieselmotor (2) nach Anspruch 1, wobei die Katalysatorelemente (22) in dem Gehäuserahmenkörper (21) sich mit einer derartigen Länge erstrecken, dass die Bildung eines Raums an einer Vorderseite eines Hauptkörpers (31) erlaubt ist, wobei der Gehäuserahmenkörper (21) erste Öffnungen (31a) zum Durchströmen von Abgasen auf Seitenwänden des Hauptkörpers (31) aufweist, die dem Raum entsprechen, und
Abgase sich zwischen den benachbarten Gehäuserahmenkörper (21) durch die ersten Öffnungen (31a) bewegen können.

4. Vorrichtung (1) zur Entfernung von NOx aus Abgasen für einen Dieselmotor (2) nach Anspruch 3, wobei der Hauptkörper (31) des Gehäuserahmenkörpers (21) zweite Öffnungen (31b) zum Verringern eines Gewichts des Gehäuserahmenkörpers (21) aufweist, wobei die zweiten Öffnungen (31b) an unterschiedlichen Positionen von den ersten Öffnungen (31 a) an den Seitenwänden des Hauptkörpers (31) gebildet sind, und ein Dämpfungsmaterial (23) zum Schützen der Katalysatorelemente (22) auf Oberflächen, die den zweiten Öffnungen (31b) entsprechen, der Katalysatorelemente (22), die in dem Hauptkörper (31) angeordnet sind, derart verteilt sind, dass das Dämpfungsmaterial (23) mit den zweiten Öffnungen (31 b) übereinstimmt.

## Revendications

1. Dispositif d'élimination des NOx des gaz d'échappement (1) pour un moteur diesel (2), comprenant un corps de récipient cylindrique (11) qui reçoit des gaz d'échappement guidés depuis le moteur diesel (2) et contient des éléments de catalyse d'élimination des NOx,
**caractérisé en ce que** le corps de récipient (11) contient une pluralité d'unités de catalyse (12), chacune incluant un corps de cadre de logement (21) carré, triangulaire ou trapézoïdal et les éléments de catalyse (22) disposés dans le corps de cadre de logement (21),
dans une section transversale du corps de récipient (11), un octogone symétrique horizontalement et verticalement (S) est supposé être inscrit dans le corps de récipient (11), et l'octogone est supposé contenir une pluralité de sections rectangulaires (P1) et une pluralité de sections triangulaires (P2) et/ou une pluralité de sections trapézoïdales (P2) entre les sections rectangulaires et un profil de l'octogone (S), et
les corps de cadre de logement (21) pour les éléments de catalyse (22) sont formés avec des sections transversales coïncidant avec les sections.

2. Dispositif d'élimination des NOx des gaz d'échappement (1) pour un moteur diesel (2) selon la revendication 1, dans lequel le corps de cadre de logement (21) inclut un corps principal (31) carré, triangulaire ou trapézoïdal qui loge les éléments de catalyse, un port de guidage avant (32) carré, triangulaire ou trapézoïdal qui fait saillie depuis un avant du corps principal (31) et a un diamètre plus petit que le corps principal (31), et un port de guidage arrière (33) carré, triangulaire ou trapézoïdal qui fait saillie au niveau d'un arrière du corps principal (31) de façon à être ajusté sur le port de guidage avant (32).

3. Dispositif d'élimination des NOx des gaz d'échappement (1) pour un moteur diesel (2) selon la revendication 1, dans lequel les éléments de catalyse (22) dans le corps de cadre de logement (21) sont étendus avec une longueur permettant la formation d'un espace en un avant d'un corps principal (31), le corps de cadre de logement (21) ayant des premières fentes (31a) pour passage des gaz d'échappement sur des parois latérales du corps principal (31) qui correspondent à l'espace, et
les gaz d'échappement peuvent se déplacer entre les corps de cadre de logement (21) adjacents à travers les premières fentes (31a).

4. Dispositif d'élimination des NOx des gaz d'échappement (1) pour un moteur diesel (2) selon la revendication 3, dans lequel le corps principal (31) du corps de cadre de logement (21) a des secondes fentes (31b) pour réduire un poids du corps de cadre de logement (21), les secondes fentes (31b) étant formées en différentes positions depuis les premières fentes (31a) sur les parois latérales du corps principal (31), et un matériau d'amortissement (23) pour protéger les éléments de catalyse (22) est disposé sur des surfaces, qui correspondent aux secondes fentes (31b), des éléments de catalyse (22) contenus dans le corps principal (31) de telle manière que le matériau d'amortissement (23) coïncide avec les secondes fentes (31b).
